# EUROPÄISCHE PATENTSCHRIFT

(11) **EP 1 574 329 B1**
(45) Veröffentlichungstag und Bekanntmachung des Hinweises auf die Patenterteilung: **10.11.2010**
(21) Anmeldenummer: 04405137.3
(22) Anmeldetag: 09.03.2004
(51) Int. Cl.: B32B 27/32, B65D 65/02

(54) **Verpackungsfolie**
Packaging film
Film d'emballage

(43) Veröffentlichungstag der Anmeldung: 14.09.2005
(73) Patentinhaber: 3A Technology & Management AG, 8212 Neuhausen am Rheinfall (CH)
(72) Erfinder: Bresson, Cyrille, 57870 Troisfontaines (FR); Cerf, Sabine, 57400 Sarrebourg (FR)

(56) Entgegenhaltungen:
- EP-A- 0 870 695
- PATENT ABSTRACTS OF JAPAN Bd. 1999, Nr. 08, 30. Juni 1999 (1999-06-30) & JP 11 070607 A (DAINIPPON PRINTING CO LTD), 16. März 1999 (1999-03-16)

## Beschreibung

Die Erfindung betrifft eine Verpackungsfolie auf der Basis eines Kunststofffilms zum Verpacken von quaderförmigen Nahrungsmittelprodukten.

Eine übliche Verpackung von quader- oder würfelförmigen Nahrungsmittelprodukten, wie z.B. Bouillonwürfeln, besteht aus einer goldlackierten oder farbig bedruckten Aluminiumfolie als Aussenseite und einer Papierschicht als Innenseite der Verpackung. Zwischen der Aluminiumfolie und der Papierschicht ist eine dünne Wachsschicht angeordnet. Eine Erwärmung des verpackten Würfels führt zu einem Schmelzen des Wachses, welches durch das Papier diffundiert und zu einer Verklebung der überlappenden Teile der Verpackungsfolie führt.

Die WO-A-01/25109 offenbart eine Kunststofffolie zum Verpacken von würfelförmigen Produkten, wie z.B. Suppenwürfeln. Die aus einem Polyolefin, vorzugsweise aus orientiertem Polyethylen (OPE) oder orientiertem Polypropylen (OPP), bestehende Kunststofffolie zeichnet sich durch eine leichte Faltbarkeit aus. Die Kunststofffolie kann einseitig metallisiert und mit einer Klebe- oder Siegelschicht versehen sein, welche beispielsweise nur dort aufgebracht ist, wo sie gebraucht wird. Weiter kann auf der Kunststofffolie ein gegebenenfalls mit einem Abdecklack versehener Farbauftrag vorgesehen sein.

Eine aus der EP-A-0 870 695 bekannte Verpackungsfolie für Bouillonwürfel besteht aus einem Film auf der Basis von Polyolefin, auf dessen Aussenseite an vorbestimmten Positionen eine Kaltsiegelschicht angeordnet ist. Die Innenseite des Polyolefinfilms ist mit einer Antihaftbeschichtung versehen. Im Bedarfsfall kann der Polyolefinfilm zur Erzeugung einer Barriereschicht gegen den Durchtritt von Sauerstoff metallisiert sein.

Eine Verpackungsfolie für würfelförmige Produkte auf der Basis eines Polyolefinfilms ist auch aus der EP-A-0 990 596 bekannt.

JP 11 070 607 A offenbart eine Verpackungsfolie mit einem Kunststofffilm, einer Barriereschicht, einer Bedruckung und einer Heisssiegelschicht an vorbestimmten Positionen auf der späteren Aussenseite der Verpackung.

Der Erfindung liegt die Aufgabe zugrunde, eine Verpackungsfolie der eingangs genannten Art auf der Basis eines Kunststofffilms zu schaffen, welche hinsichtlich der Barriereeigenschaften, der Festigkeit, der Faltbarkeit und der optischen Erscheinung hohen Ansprüchen zu genügen vermag. Die Verpackungsfolie soll zudem kostengünstig hergestellt und auf den üblichen Verpackungsmaschinen eingesetzt werden können.

Zur erfindungsgemässen Lösung der Aufgabe führt, dass auf dem Kunststofffilm
- eine Barriereschicht gegen den Durchtritt von Wasserdampf und Gasen,
- gegebenenfalls auf der Barriereschicht eine erste Schutzlackschicht,
- auf der Barriereschicht oder auf der ersten Schutzlackschicht eine Bedrukkung,
- auf der Bedruckung eine zweite Schutzlackschicht sowie an vorbestimmten Positionen eine Heisssiegelschicht und
- auf der Bedruckung, auf der zweiten Schutzlackschicht oder auf der Heisssiegelschicht an vorbestimmten Positionen eine Kaltsiegelschicht angeordnet ist.

Die erfindungsgemässe Verpackungsfolie zeichnet sich dadurch aus, dass der als Basissubstrat eingesetzte Kunststofffilm nur auf einer Seite mit weiteren Beschichtungen versehen ist.

Als Material für den Kunststofffilm dient bevorzugt ein Polyolefin, insbesondere orientiertes Polypropylen (OPP) oder Polyethylen hoher Dichte (PEHD). Ein weiterer bevorzugter Kunststoff ist Polylactat (PLA).

Die Sperrschicht gegen Gase Dämpfe und Feuchtigkeit, die sog. Barriereschicht, kann durch eine Metallfolie aus beispielsweise Aluminium gebildet sein. Andere geeignete Materialien für Sperrschichten sind beispielsweise Filme aus Kunststoffen, wie Polyvinylidenchlorid (PVDC) oder Ethylvinylalkohol, oder eine Schicht aus keramischen Materialien, wie beispielsweise aus Silizium- oder Aluminiumoxid bzw. -nitrid, die in dünner Schicht, z.B. im Bereich von 10 - 500 nm, im Vakuum auf die Trägerfolie abgeschieden werden. Beispiele weiterer Sperrschichten sind metallische Schichten, z.B. aus Aluminium, die durch Sputtern auf dem Träger abgeschieden werden.

Im vorliegenden Fall ist insbesondere eine Metallisierung geeignet, dem Kunststofffilm und damit der Verpackungsfolie Barriereeigenschaften zu verleihen, welche den Durchtritt von Flüssigkeiten, Gasen, Dämpfen, Wasserdampf, Aromen oder Geruchsstoffen verhindern. Die Metallisierung schützt das Füllgut auch vor einem schädlicher Lichteinfluss. Eine bevorzugte Metallisierung besteht aus Aluminium, welches beispielsweise durch Sputtern oder durch Abscheidung aus dem Vakuum auf den Kunststofffilm in einer Dicke von etwa 10 nm bis etwa 2 µm aufgetragen wird.

Als Schutzschicht für die Metallisierung wird zweckmässigerweise ein Lack auf der Basis von Nitrocelluloselack verwendet. Diese erste Schutzlackschicht dient zugleich als Druckträger. In diesem Fall wird die Bedruckung bevorzugt ebenfalls mit einer Schutzlackschicht auf der Basis von Nitrocelluloselack versehen. Der Auftrag der Heisssiegelschicht an vorbestimmten Positionen erfolgt wie die zweite Schutzlackschicht auf die Bedruckung.

Das Bedrucken des metallisierten und mit der ersten Schutzlackschicht versehenen Kunststofffilms kann mit allen bekannten Druckverfahren vorgenommen werden, so z.B. Buch-, Offset-, Flexo-, Sieb-, Helio- und Kupfertiefdruck, aber auch Laserdruck, Inkjet, elektrofotografische und magnetografische Druckverfahren. Die Wahl, welches Druckverfahren zur Anwendung kommt, hängt von der gewünschten Druckqualität, von den jeweiligen technischen Gegebenheiten und der Auflagenhöhe ab. Die zweite Schutzlackschicht schützt das Druckbild.

Eine bevorzugte Heisssiegelschicht ist auf einem Lack auf der Basis von Copolymeren aus Ethylen und Vinylacetat oder Vinylacetat und Vinylchlorid aufgebaut.

Eine bevorzugte Kaltsiegelschicht ist auf einem Lack auf der Basis von Natur-oder Kunstlatex aufgebaut. Es können aber auch andere Haftkleber verwendet werden.

Da die Heiss- und Kaltsiegelschichten mit hoher Genauigkeit an den vorbestimmten Positionen aufgetragen werden müssen, erfolgt deren Auftrag bevorzugt ebenfalls auf einer Druckmaschine über eine Druckmarkensteuerung (registered).

Die erfindungsgemässe Verpackungsfolie wird als Rollenware hergestellt. Bei einer ersten Art der Verpackung wird die Verpackungsfolie von der Rolle abgewickelt und zu einzelnen Folienblättern geschnitten. Die Folienblätter, welche das Verpackungsmaterial für je einen zu verpackenden quaderförmigen Block oder Würfel bilden, werden in einer speziellen Einrichtung, die bei weichen Würfeln aus z.B. Weichkäse einen Kolben umfassen kann, durch Falten an die Seitenflächen des Blockes angelegt, wobei die Folie an zwei gegenüberliegenden Seitenflächen eingeschlagen wird und sich überlappt. In diesem Überlappungsbereich sind die Heiss- und Kaltsiegelschichten angeordnet. Bei einer zweiten Verpackungsart wird die Verpackungsfolie über eine Längsschweissnaht zu einem Schlauch geformt und nach dem Einschieben eines Würfels wird eine einzelne Verpackungseinheit vom Schlauch abgeschnitten. Anschliessend erfolgt das Einschlagen der Folie an den offenen Seiten.

Die Kaltsiegelschicht dient der Fixierung der um das Füllgut gewickelten und diesem anliegenden Verpackungsfolie im Überlappungsbereich, damit sich die Folie vor dem nachfolgenden Heisssiegeln nicht selbsttätig wieder entfalten und den weiteren Verarbeitungsprozess stören kann. Mit dieser vorläufig fixierten Folie wird der verpackte quaderförmige Block oder Würfel zu einer Heisssiegeleinrichtung transportiert, wo die Heisssiegelung zur Erzeugung einer dauerhaften Fixierung der Folie erfolgt.

Die erfindungsgemässe Verpackungsfolie zeigt ein ausgezeichnetes Faltverhalten mit geringer Rückstellelastizität.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Schichtaufbau einer bevorzugten Ausführungsform einer Verpackungsfolie;
- Fig. 2 eine Schrägsicht auf einen mit der Verpackungsfolie von Fig. 1 durch Umwicklung bzw. Falten und Einschlagen verpackten Quader.

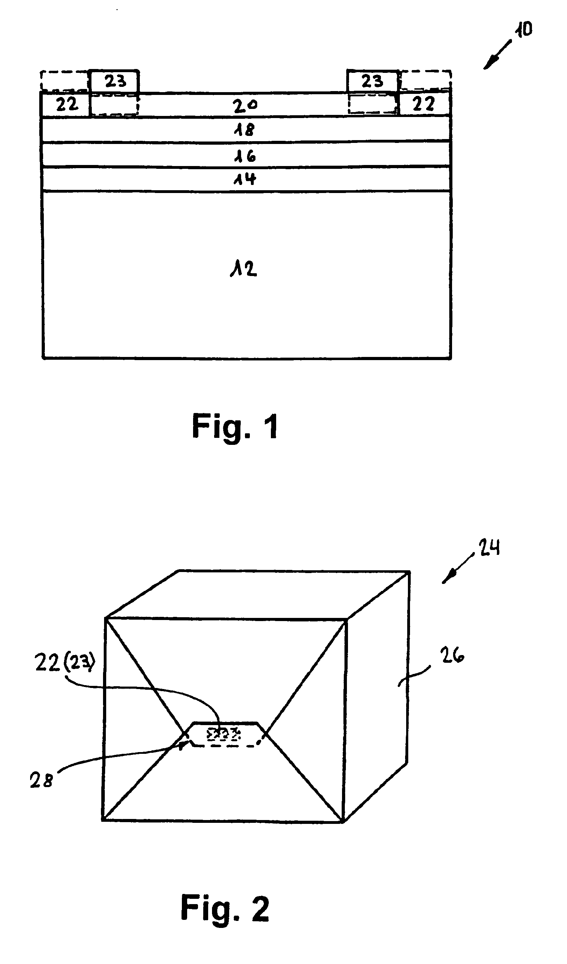

Ein Verbundmaterial 10 weist gemäss Fig. 1 folgenden Aufbau auf:
12 Kunststofffilm aus
   - orientiertem Polypropylen (OPP), 25 bis 45 µm mit-einer Dichte zwischen 0,40 und 0,60 g/m², oder
   - Polyethylen hoher Dichte (PEHD), 20 bis 45 µm, oder
   - Polylactat (PLA), 15 bis 40 µm,
14 Barriereschicht aus Aluminium, im Vakuum auf den Kunststofffilm 12 aufgedampft, 10 nm bis 2 µm,
16 erste Schutzlackschicht aus einem Nitrocelluloselack, 1,1 ± 0,5 g/m²,
18 Bedruckung, z. B. durch Helio- oder Flexographie
20 zweite Schutzlackschicht aus Nitrocelluloselack, 2.0 ± 1 g/m²,
22 Heissiegelschicht, hergestellt durch Auftrag von 2.0 ± 1 g/m² eines Lackes auf der Basis von
   - Copolymeren aus Ethylen und Vinylacetat oder
   - Copolymeren aus Vinylacetat und Vinylchlorid oder
   - Acrylat
23 Kaltsiegelschicht auf der Basis von Natur- oder Kunstlatex oder anderer Haftkleber, 1 - 4 g/m²

Bei der Herstellung der Verpackungsfolie 10 wird zunächst der Kunststofffilm 12 mit der Barriereschicht 14 versehen. Anschliessend erfolgt der Auftrag einer ersten Schutzschicht 16. Diese kann auch fehlen, wenn ein Bedrucken der Barriereschicht problemlos ist. Auf die erste Schutzlackschicht 16 oder bei fehlender Schutzlackschicht direkt auf die Barriereschicht 14 folgt die Bedruckung 18, welche mit der zweiten Schutzlackschicht 20 versehen wird.

Der Auftrag der Heissiegelschicht 22 auf der Bedruckung 18 erfolgt an vorbestimmten Positionen, an welchen bei der späteren Verpackung die Siegelung erfolgen soll.

Der Auftrag der Kaltsiegelschicht 23 erfolgt ebenfalls an vorbestimmten Positionen, an welchen bei der späteren Verpackung die Siegelung erfolgen soll. In der Zeichnung ist die Kaltsiegelschicht unmittelbar neben der Heisssiegelschicht 22 auf der zweiten Schutzlackschicht 20 aufgetragen. Alternativ kann die Kaltsiegelschicht 23 - wie in der Zeichnung strichliniert dargestellt - auch direkt auf die Bedruckung 18 oder auf die Heisssiegelschicht 22 aufgetragen werden.

Die freie Seite des Kunststofffilms 12 bildet die Innenseite, die zweite Schutzlackschicht 20 und die an vorbestimmten Positionen aufgetragenen Heiss- und Kaltsiegelschichten 22, 23 die Aussenseite der aus der Verpackungsfolie 10 hergestellten Verpackung.

Eine aus der Verpackungsfolie 10 hergestellte Verpackung 24 für ein quaderförmiges Produkt aus z.B. einer festen oder halbfesten Bouillonmasse liegt dem Füllgut gemäss Fig. 2 dicht an, die Seitenflächen 26 der Verpackung entsprechen den Seitenflächen des verpackten Bouillonblocks. An zwei einander gegenüberliegenden Seiten der Verpackung ist die Verpackungsfolie eingeschlagen. Im Überlappungsbereich 28 befindet sich die an vorbestimmten Positionen aufgetragenen Heiss- und Kaltsiegelschichten 22, 23. Die Kaltsiegelung ergibt sich beim Einschlagen und Andrücken der Verpackungsfolie beim maschinellen Abpacken der quaderförmigen Blöcke oder Würfel. Die Heisssiegelung erfolgt beispielsweise während des Durchlaufs des verpackten Blocks zwischen zwei beheizten Schienen.

## Patentansprüche

1. Verpackungsfolie auf der Basis eines Kunststofffilms (12) zum Verpacken von quaderförmigen Nahrungsmittelprodukten,
**dadurch gekennzeichnet, dass**
auf dem Kunststofffilm (12)
- eine Barriereschicht (14) gegen den Durchtritt von Wasserdampf und Gasen,
- gegebenenfalls auf der Barriereschicht (14) eine erste Schutzlackschicht (16),
- auf der Barriereschicht (14) oder auf der ersten Schutzlackschicht (16) eine Bedruckung (18) und
- auf der Bedruckung (18) eine zweite Schutzlackschicht (20) sowie an vorbestimmten Positionen eine Heisssiegelschicht (22) und
- auf der Bedruckung (18), auf der zweiten Schutzlackschicht (20) oder auf der Heisssiegelschicht (22) an vorbestimmten Positionen eine Kaltsiegelschicht (23)
angeordnet ist.

2. Verpackungsfolie nach Anspruch 1, **dadurch gekennzeichnet, dass** der Kunststofffilm (12) aus einem Polyolefin, insbesondere aus orientiertem Polypropylen (OPP) oder aus Polyethylen hoher Dichte (PEHD) aufgebaut ist.

3. Verpackungsfolie nach Anspruch 1, **dadurch gekennzeichnet, dass** der Kunststofffilm (12) aus Polylactat (PLA) aufgebaut ist.

4. Verpackungsfolie nach einem der Ansprüche 1 bis 3, **dadurch gekennzeichnet, dass** die Barriereschicht (14) eine aus Aluminium aufgebaute Metallisierung ist.

5. Verpackungsfolie nach einem der Ansprüche 1 bis 3, **dadurch gekennzeichnet, dass** die Barriereschicht (14) ein Kunststofffilm aus Polyvinylidenchlorid (PVDC) oder eine aus dem Vakuum abgeschiedene, 10 - 500 nm dicke Schicht aus keramischen Materialien, vorzugsweise aus Silizium- oder Aluminiumoxid ist.

6. Verpackungsfolie nach einem der Ansprüche 1 bis 5, **dadurch gekennzeichnet, dass** die Schutzlackschichten (16, 20) auf der Basis von Nitrocelluloselack aufgebaut sind.

7. Verpackungsfolie nach einem der Ansprüche 1 bis 6, **dadurch gekennzeichnet, dass** die Heisssiegelschicht (22) auf einem Lack auf der Basis von Copolymeren aus Ethylen und Vinylacetat oder Vinylacetat und Vinylchlorid oder auf Acrylatbasis aufgebaut ist.

8. Verpackungsfolie nach einem der Ansprüche 1 bis 7, **dadurch gekennzeichnet, dass** die Kaltsiegelschicht (23) auf einem Lack auf der Basis von Natur- oder Kunstlatex oder anderer Haftkleber aufgebaut ist.

## Claims

1. Packaging film, based on a plastics material film (12), for packaging cuboidal food products,
**characterised in that**
- a barrier coating (14) to prevent penetration of water vapour and gases,
- if necessary, a first protective lacquer coating (16) on the barrier coating (14),
- a printing (18) on the barrier coating (14) or on the protective lacquer coating (16) and
- a second protective lacquer coating (20) and, at predetermined positions, a heat sealable coating (22) on the printing (18) and
- a cold sealable coating (23) on the printing (18), on the second protective lacquer coating (20) or at predetermined positions on the heat sealable coating (22)
are arranged on the plastics material film (12).

2. Packaging film according to claim 1, **characterised in that** the plastics material film (12) is formed from a polyolefin, in particular of oriented polypropylene (OPP) or of high-density polyethylene (PEHD).

3. Packaging film according to claim 1, **characterised in that** the plastics material film (12) is formed from polylactate (PLA).

4. Packaging film according to any one of claims 1 to 3, **characterised in that** the barrier coating (14) is a metal coating formed from aluminium.

5. Packaging film according to any one of claims 1 to 3, **characterised in that** the barrier coating (14) is a plastics material film made of polyvinylidene chloride (PVDC) or a 10-500 nm thick coating made of ceramic materials, preferably of silicium oxide or aluminium oxide, deposited outside the vacuum.

6. Packaging film according to any one of claims 1 to 5, **characterised in that** the protective lacquer coatings (16, 20) are formed on the basis of cellulose nitrate lacquer.

7. Packaging film according to any one of claims 1 to 6, **characterised in that** the heat sealable coating (22) is formed on a lacquer based on copolymers of ethylene and vinyl acetate or vinyl acetate and vinyl chloride or based on acrylate.

8. Packaging film according to any one of claims 1 to 7, **characterised in that** the cold sealable coating (23) is formed on a lacquer based on natural or artificial latex or another pressure-sensitive adhesive.

## Revendications

1. Feuille d'emballage à base d'un film de matière plastique (12) pour l'emballage de produits alimentaires parallépipédiques,
**caractérisée en ce que**, il est disposé
sur le film de matière plastique (12),
- une couche barrière (14) contre l'entrée de vapeur d'eau et de gaz,
- éventuellement sur la couche barrière (14) une première couche protectrice de laque (16),
- sur la couche barrière (14) ou sur la première couche protectrice de laque (16) une impression (18) et
- sur l'impression (18) une seconde couche protectrice de laque (20) ainsi qu'à des positions prédéterminées une couche de thermoscellement (22) et
- sur l'impression (18), sur la seconde couche protectrice de laque (20) ou sur la couche de thermoscellement (22) à des positions prédéterminées une couche de scellement à froid (23).

2. Feuille d'emballage selon la revendication 1, **caractérisée en ce que** le film de matière plastique (12) est constitué d'une polyoléfine, en particulier de polypropylène orienté (OPP) ou de polyéthylène de densité élevée (PEHD).

3. Feuille d'emballage selon la revendication 1, **caractérisée en ce que** le film de matière plastique (12) est constitué de polylactate (PLA).

4. Feuille d'emballage selon l'une quelconque des revendications 1 à 3, **caractérisée en ce que** la couche barrière (14) est une métallisation constituée d'aluminium.

5. Feuille d'emballage selon l'une quelconque des revendications 1 à 3, **caractérisée en ce que** la couche barrière (14) est un film de matière plastique constitué de poly(chlorure de vinylidène) (PVDC) ou d'une couche déposée sous vide, d'épaisseur 10-500 nm de matériaux céramiques, de préférence d'oxyde de silicium ou d'aluminium.

6. Feuille d'emballage selon l'une quelconque des revendications 1 à 5, **caractérisée en ce que** les couches protectrices de laque (16, 20) sont constituées à base de laque de nitrocellulose.

7. Feuille d'emballage selon l'une quelconque des revendications 1 à 6, **caractérisée en ce que** la couche de thermoscellement (22) est constituée d'une laque à base de copolymères d'éthylène et d'acétate de vinyle ou d'acétate de vinyle et de chlorure de vinyle ou à base d'acrylate.

8. Feuille d'emballage selon l'une quelconque des revendications 1 à 7, **caractérisée en ce que** la couche de scellement à froid (23) est constituée d'une laque à base de latex naturel ou synthétique ou d'un autre adhésif.
